# EUROPEAN PATENT APPLICATION

(11) **EP 1 065 315 A1**
(43) Date of publication of application: **03.01.2001**
(21) Application number: 99112567.5
(22) Date of filing: 01.07.1999
(51) Int. Cl.: D21H 27/40, B32B 3/28, B32B 29/00, D06N 7/00, D21H 27/10, B65D 65/40

(54) **Paper laminate**

(71) Applicant: CARRS PAPER LIMITED, Solihull West Midlands B90 4LJ (GB)
(72) Inventor: Bond, Michael Peter, Nr Rugby, Warwickshire CV23 8RY (GB)
(74) Representative: Wardley, Diana Mary

(57) **Abstract**

A laminate (10) is described having first and second external surfaces and comprising a first paper layer (11) of crepe paper laminated to a second paper layer (12) of extensible kraft paper.

## Description

### Description of Invention

The invention relates to a laminate, and in particular, although not exclusively, to a laminate suitable for use as a backing for a carpet underlay or as a packaging material.

Many forms or laminates are known for such uses but suffer from a range of disadvantages, either relating to their effectiveness, longevity or their appearance.

It is an object of the invention to provide an improved form of laminate.

According to a first aspect of the invention there is provided a laminate comprising a first paper layer of crepe paper laminated to a second paper layer of extensible kraft paper.

Preferably the crepe paper is a plain non-extensible kraft paper treated by lateral compressing, corrugating, creping or embossing.

The laminate may further comprise an interposed adhesive layer between the first and second paper layers. The adhesive may be aqueous based, such as polyvinyl acetate (PVA). In an alternative, the adhesive may be a cold setting adhesive such as wax.

Preferably the extensible kraft paper has a weight in the range 40-120gm⁻². Likewise, preferably the creped paper has a weight in the range 40-l20gm⁻² prior to creping.

According to a second aspect of the invention there is provided a carpet underlay comprising a backing comprising a laminate according to the first aspect of the invention.

According to a third aspect of the invention there is provided a packaging material comprising a laminate according to the first aspect of the invention.

The packaging material may further comprise adhesive on one or both of it's external surfaces. The adhesive is preferably cohesive or pressure sensitive.

In an alternative, the packaging material may further comprise a coating on one or both of its external surfaces to provide colour or moisture protection.

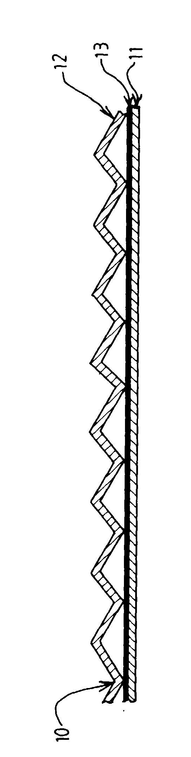

An embodiment of a laminate according to the invention will now be described, by way of example only, with reference to the accompanying drawing which is a schematic cross-sectional view of the laminate according to the invention.

A laminate 10 comprises a first paper layer 11, a second paper layer 12 and an interposed adhesive layer 13. The first paper layer 11 comprises extensible kraft paper which exhibits stretch of 6-11%, this being 3 - 6 times the stretch exhibited by plain non-extensible kraft paper. The second paper layer 12 comprises creped paper, which is produced prior to the lamination by laterally compressing, corrugating, creping or embossing a plain non-extensible kraft paper. The adhesive layer 13 comprises an aqueous based adhesive, such as polyvinyl acetate (PVA), polyvinyl alcohol or starch.

If the laminate 10 is for use as a carpet underlay backing then the layers 11, 12 and 13 may take the following specific forms. The first paper layer 11 may have a weight of 60gm⁻², whilst the second paper layer 12 may be an MG Pure Kraft of 100% virgin pulp with a weight of 39gm⁻², which has been wet creped using a starch solution to produce a creped paper of 47gm⁻² exhibiting 20% stretch. The adhesive layer 13 may comprise an aqueous based adhesive such as PVA, or a cold setting adhesive such as wax, which was applied to the extensible kraft first paper layer 11 immediately prior to the bringing together of the two paper layers 11, 12.

Clearly, where the laminate 10 is for use as a carpet underlay backing the adhesive chosen for use as the layer 13 must be one which is unaffected by heating processes involved in the subsequent formation of the carpet underlay.

More generally both the creped and extensible kraft layers 11, 12 may be of any appropriate weight for the application, but will typically be in the range 40-120gm⁻². In addition both the creped and extensible kraft layers 11, 12 may comprise any combination of virgin pulp and recycled pulp in the range 100% virgin pulp to 100% recycled pulp, as appropriate for the application. Either or both the creped and extensible kraft layers may comprise modified paper formulations containing additives, such as polypropylene fibres which improve the tensile and tear strengths.

Where the laminate 10 is to be used as packaging material adhesive (not shown) may be applied to one or both external surfaces of the laminate 10, preferably cohesive or pressure sensitive adhesive, such that when wrapped around an object it produces a seal. The adhesive may be applied either before or after the lamination, and may cover the whole or part of the surface, for example in spots, stripes, or a printed pattern. In an alternative, coatings may be applied to one or both external surfaces to improve the appearance, e.g. a pigmented coating and/or to provide protection e.g. against moisture.

The laminate according to the invention provides the advantage that it exhibits similar physical strength properties, such as tear resistance, tensile strength and puncture resistance as is provided by conventional stitched crepe paper carpet underlay backing, whilst also having a pleasing appearance to the consumer from the creped side. Furthermore, the use of an extensible kraft layer significantly improves the handling characteristics of the laminate in use as a carpet underlay backing, or as a packaging material, when compared with a laminate comprising a non-extensible kraft layer. For a carpet underlay the advantages include increased ease of fitting, and less chance of delamination or other failure of the laminate. For a packaging material the advantages include additional cushioning, the ability to achieve a tighter wrap, and a more pleasing appearance.

For clarity the word "kraft" is used through out this specification in the normal sense used in the paper industry. That is to mean an unbleached relatively strong paper.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A laminate (10) having first and second external surfaces and comprising a first paper layer (11) of crepe paper laminated to a second paper layer (12) of extensible kraft paper.

2. A laminate (10) according to claim 1 wherein the crepe paper (11) is a plain non-extensible kraft paper treated by lateral compressing, corrugating, creping or embossing.

3. A laminate (10) according to claim 1 or 2 wherein the laminate (10) further comprises an interposed adhesive layer (13) between the first and second paper layers (11,12).

4. A laminate (10) according to claim 3 wherein the adhesive (13) is aqueous based.

5. A laminate (10) according to claim 4 wherein the adhesive (13) is polyvinyl acetate.

6. A laminate (10) according to claim 3 wherein the adhesive (13) is cold setting.

7. A laminate (10) according to claim 6 wherein the adhesive (13) is wax.

8. A laminate (10) according to any preceding claim wherein the extensible kraft paper (12) has a weight in the range 40-120gm⁻².

9. A laminate (10) according to any preceding claim wherein the creped paper (11) has a weight in the range 40-120gm⁻² prior to creping.

10. A carpet underlay comprising a backing comprising a laminate (10) according to any one of the preceding claims.

11. A packaging material comprising a laminate (10) according to any one of claims 1 to 9.

12. A packaging material according to claim 11 wherein it further comprises a coating on one or both of the first and second external surfaces.

13. A packaging material according to claim 12 wherein the coating on one or both surface(s) is an adhesive.

14. A packaging material according to claim 13 wherein the adhesive is cohesive or pressure sensitive.

15. A packaging material according to claim 12 wherein the coating on one or both surface(s) is pigmented.

16. A packaging material according to claim 12 wherein the coating on one or both surface(s) is protective.

17. A packaging material according to claim 16 wherein the protective coating is moisture resistant.
